# EUROPÄISCHE PATENTANMELDUNG

(11) **EP 2 650 818 A1**
(43) Veröffentlichungstag der Anmeldung: **16.10.2013**
(21) Anmeldenummer: 13163325.7
(22) Anmeldetag: 11.04.2013
(51) Int. Cl.: G06F 21/60

(54) **System und Verfahren zur sicheren Kommunikation**

(30) Priorität: 13.04.2012 DE 102012007430
(71) Anmelder: NCP engineering GmbH, 90449 Nürnberg (DE)
(72) Erfinder: Gundelfinger, Jochen, 91322 Gräfenberg (DE)
(74) Vertreter: Grund, Martin

(57) **Zusammenfassung**

Die Erfindung beschreibt ein Verfahren und ein System zur sicheren Kommunikation zwischen einer ersten Computereinrichtung (100) und einem Netzwerk (300). Die vorliegende Erfindung verwendet hierzu eine zweite Computereinrichtung (200) mit einem gehärteten Betriebssystem, welches sich von dem Betriebssystem der ersten Computereinrichtung (100) unterscheidet. Ein Authentifizierungsmittel (210) in der zweiten Computereinrichtung (200) dient der Authentifizierung eines Benutzers. Ein Verschlüsselungsmittel (230) in der zweiten Computereinrichtung (200) dient der Verschlüsselung der von der ersten Computereinrichtung (100) empfangenen Daten, sodass eine verschlüsselte Kommunikation mit dem Netzwerk (300) ermöglicht wird. Ein Entschlüsselungsmittel (230) dient der Entschlüsselung der von dem Netzwerk (300) empfangenen verschlüsselten Daten für die erste Computereinrichtung (100).

## Beschreibung

### GEBIET DER ERFINDUNG

Die vorliegende Erfindung betrifft ein System und ein Verfahren zur sicheren Kommunikation.

### HINTERGRUND DER ERFINDUNG

Moderne Kommunikationssysteme, beispielsweise für Telekommunikation und/oder Datenübertragung, weisen nur eine geringe Sicherheit auf und können - mit entsprechenden Fachkenntnissen - verhältnismäßig leicht abgehört und/oder manipuliert werden. Hierdurch können Angreifer beispielsweise Zugriff auf sensible Daten und Informationen oder auch auf die entsprechenden Rechnersysteme selbst erhalten und beispielsweise Schadsoftware auf den betroffenen Computereinrichtungen aufspielen.

Die Sicherung einer Verbindung mit einem Netzwerk, wie etwa einem Firmennetzwerk oder dem Internet, ist dabei besonders wichtig - beispielsweise um unbefugten Zugriff auf das Firmennetzwerk oder unbefugten Zugriff auf eine Computereinrichtung aus dem Internet zu verhindern.

Ein Problem bei herkömmlichen Systemen und Verfahren zur Kommunikation ist, dass diese Systeme oder Verfahren keine sichere Kommunikation ermöglichen. Beispielsweise lassen sich vorhandene Schutzmechanismen oft leicht aushebeln und/oder umgehen, oder die Systeme sind schwer zu konfigurieren oder umständlich zu benutzen.

Es ist daher eine Aufgabe der vorliegenden Erfindung, ein System und ein Verfahren zur Kommunikation bereitzustellen, welches eine sichere Kommunikation ermöglicht.

Diese Aufgabe wird durch die Gegenstände der unabhängigen Ansprüche gelöst. Die abhängigen Ansprüche enthalten vorteilhafte Ausgestaltungen und Weiterbildungen der Erfindung.

### ZUSAMMENFASSUNG DER ERFINDUNG

Gemäß einer Ausführungsform umfasst die Erfindung ein System zur sicheren Kommunikation mit einer ersten Computereinrichtung, einer zweiten Computereinrichtung. Die erste Computereinrichtung ist mit der zweiten Computereinrichtung verbunden und kann mit dieser kommunizieren. Die zweite Computereinrichtung ist mit einem Netzwerk verbunden und kann mit diesem kommunizieren. Insbesondere wird über die zweite Computereinrichtung eine sichere Kommunikation zwischen der ersten Computereinrichtung und dem Netzwerk ermöglicht.

Die Kommunikation kann dabei auf beliebige Weise erfolgen und kann insbesondere die Übertragung von Sprache, Daten oder Ähnlichem umfassen. Das System erlaubt also sichere Telekommunikation und/oder eine sichere Datenübertragung.

Erfindungsgemäß ermöglicht die Verbindung zwischen der zweiten Computereinrichtung und dem Netzwerk eine verschlüsselte Datenübertragung, bei der die zu übertragenden Daten etwa mit einem Verschlüsselungscode verschlüsselt wurden.

Erfindungsgemäß handelt es sich bei der zweiten Computereinrichtung um eine mobile Computereinrichtung, zum Beispiel um ein Smartphone, einen Tablet-Computer, einen Laptop oder ein mobiles Modem. Bei der ersten Computereinrichtung kann es sich um eine beliebige Computereinrichtung handeln, beispielsweise um einen Laptop, einen gewöhnlichen Desktop-Computer oder einen Tablet-Computer.

Erfindungsgemäß umfasst die erste Computereinrichtung ein erstes Betriebssystem und die zweite Computereinrichtung umfasst ein zweites Betriebssystem. Erfindungsgemäß handelt es sich bei dem zweiten Betriebsystem um ein gehärtetes Betriebssystem. Gemäß einer vorteilhaften Ausführungsform unterscheiden sich das erste Betriebssystem und das zweite Betriebssystem voneinander, sind also nicht identisch. Das zweite Betriebssystem gewährleistet vorteilhafterweise durch einen oder mehrere Schutzmechanismen eine höhere Sicherheit als das erste Betriebssystem.

Gemäß einer Ausführungsform der Erfindung umfasst die zweite Computereinrichtung ein Authentifizierungsmittel zur Authentifizierung eines Benutzers. Insbesondere kann das Authentifizierungsmittel dazu ausgelegt sein, den Benutzer der ersten und/oder der zweiten Computereinrichtung zu authentifizieren. Das Authentifizierungsmittel erzeugt, basierend auf der Benutzerauthentifikation, einen oder mehrere Befehle für ein Verschlüsselungsmittel und/oder ein Entschlüsselungsmittel.

Die zweite Computereinrichtung umfasst erfindungsgemäß ein erstes Empfangsmittel zum Empfangen von Daten von der ersten Computereinrichtung, ein Verschlüsselungsmittel zum Verschlüsseln der von der ersten Computereinrichtung empfangenen Daten basierend auf dem oder den von dem Authentifizierungsmittel erzeugten Befehlen, ein erstes Sendemittel zum Senden der von dem Verschlüsselungsmittel verschlüsselten Daten an das Netzwerk, ein zweites Empfangsmittel zum Empfangen verschlüsselter Daten von dem Netzwerk, ein Entschlüsselungsmittel zum Entschlüsseln der von dem Netzwerk empfangenen verschlüsselten Daten basierend auf dem oder den Befehlen des Authentifizierungsmittels und ein zweites Sendemittel zum Senden der entschlüsselten Daten an die erste Computereinrichtung.

Gemäß einer weiteren Ausführungsform der Erfindung kann auch die Kommunikation zwischen der ersten Computereinrichtung und der zweiten Computereinrichtung verschlüsselt sein. In diesem Fall können in der ersten Computereinrichtung und in der zweiten Computereinrichtung zusätzliche Verschlüsselungs- und Entschlüsselungsmittel vorhanden sein.

Gemäß einer Ausführungsform der Erfindung handelt es sich bei der Verbindung zwischen dem ersten Sendemittel und dem Netzwerk, sowie bei der Verbindung zwischen dem zweiten Empfangsmittel und dem Netzwerk jeweils um eine drahtgebundene Verbindung. Gemäß einer hierzu alternativen Ausführungsform der Erfindung handelt es sich bei der Verbindung zwischen dem ersten Sendemittel und dem Netzwerk, sowie bei der Verbindung zwischen dem zweiten Empfangsmittel und dem Netzwerk jeweils um eine drahtlose Verbindung, beispielsweise um eine WLAN-Verbindung oder um eine Mobilfunkverbindung.

Gemäß einer Ausführungsform der Erfindung handelt es sich bei der Verbindung zwischen dem ersten Empfangsmittel und der ersten Computereinrichtung sowie bei der Verbindung zwischen dem zweiten Sendemittel und der ersten Computereinrichtung um eine drahtgebundene Verbindung. Alternativ kann aber auch eine drahtlose Verbindung verwendet werden, beispielsweise eine Bluetooth-Verbindung, eine WLAN-Verbindung oder eine Mobilfunk-Verbindung.

Gemäß einer vorteilhaften Ausführungsform der Erfindung handelt es sich bei der Verbindung zwischen dem ersten Sendemittel und dem Netzwerk sowie der Verbindung zwischen dem zweiten Empfangsmittel und dem Netzwerk um eine drahtgebundene Verbindung, wohingegen es sich bei der Verbindung zwischen dem ersten Empfangsmittel und der ersten Computereinrichtung sowie dem zweiten Empfangsmittel und der ersten Computereinrichtung um eine drahtlose Verbindung handelt.

Gemäß einer hierzu alternativen Ausführungsform der Erfindung handelt es sich bei der Verbindung zwischen dem ersten Sendemittel und dem Netzwerk sowie der Verbindung zwischen dem zweiten Empfangsmittel und dem Netzwerk um eine drahtlose Verbindung, wohingegen es sich bei der Verbindung zwischen dem ersten Empfangsmittel und der ersten Computereinrichtung sowie dem zweiten Empfangsmittel und der ersten Computereinrichtung um eine drahtgebundene Verbindung handelt. Es sind jedoch auch Ausführungsformen mit ausschließlich drahtlosen oder ausschließlich drahtgebundenen Verbindungen möglich. Dies erlaubt es, für jede Verbindungsstrecke die jeweils optimale Verbindungsmethode zu wählen.

Gemäß einer vorteilhaften Ausführungsform handelt es sich bei dem Verschlüsselungsmittel um ein zertifiziertes Verschlüsselungsmittel und bei dem Entschlüsselungsmittel um ein zertifiziertes Entschlüsselungsmittel.

Eine weitere Ausführungsform der Erfindung stellt ein Verfahren zur sicheren Kommunikation dar, mit den Schritten: Verbinden einer ersten Computereinrichtung, welche ein erstes Betriebssystem umfasst, mit einer zweiten Computereinrichtung, wobei die zweite Computereinrichtung eine mobile Computereinrichtung ist und ein zweites Betriebssystem umfasst, wobei das zweite Betriebssystem ein gehärtetes Betriebssystem ist, Authentifizieren eines Benutzers und Erzeugen eines Befehls basierend auf der Authentifizierung des Benutzers, Empfangen von Daten von der ersten Computereinrichtung, Verschlüsseln der von der ersten Computereinrichtung empfangenen Daten basierend auf dem Befehl der Benutzerauthentifizierung, Senden der verschlüsselten Daten an ein Netzwerk, Empfangen verschlüsselter Daten von dem Netzwerk, Entschlüsseln der von dem Netzwerk empfangenen Daten basierend auf dem Befehl der Benutzerauthentifizierung, und Senden der entschlüsselten Daten an die erste Computereinrichtung.

Gemäß einer vorteilhaften Ausführungsform der Erfindung handelt es sich bei der Verbindung zwischen dem ersten Sendemittel und dem Netzwerk sowie der Verbindung zwischen dem Netzwerk und dem zweiten Empfangsmittel um eine Punkt zu Punkt - Verbindung (point to point - Verbindung).

Gemäß einer weiteren vorteilhaften Ausführungsform handelt es sich bei der Verbindung zwischen dem ersten Empfangsmittel und der ersten Computereinrichtung, sowie dem zweiten Sendemittel und der ersten Computereinrichtung um eine Multipoint-Verbindung.

Es versteht sich von selbst, dass die hierin beschriebenen Verfahrensschritte mit den hierin beschrittenen Systemkomponenten kombiniert werden können.

### KURZE BESCHREIBUNG DER ZEICHNUNGEN

Figur 1 zeigt schematisch einen Aufbau eines exemplarischen Systems zur Kommunikation.
Figur 2 zeigt schematisch ein exemplarisches Verfahren zur sicheren Kommunikation.

### DETAILLIERTE BESCHREIBUNG

Nachfolgend werden Ausführungsbeispiele von erfindungsgemäßen Systemen und Verfahren zur sicheren Kommunikation beschrieben.

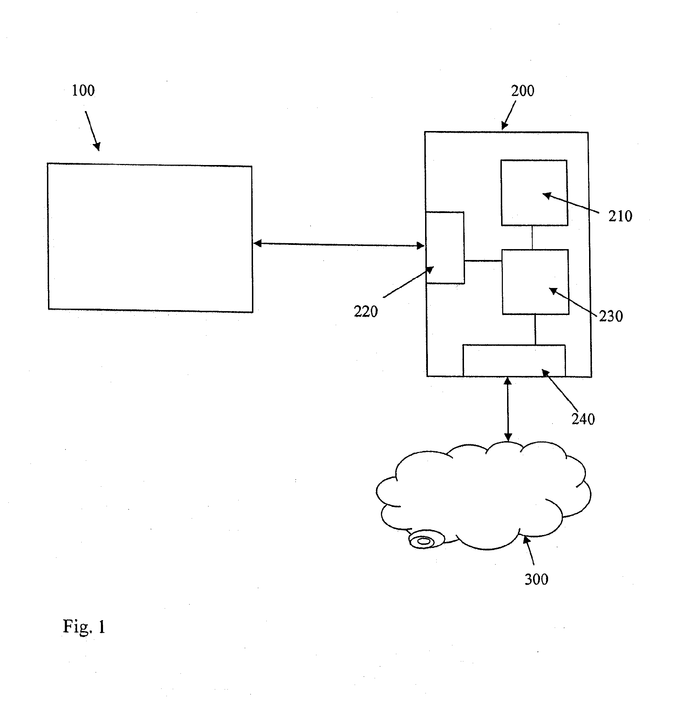

Figur 1 zeigt schematisch eine Konfiguration gemäß einem Ausführungsbeispiel der vorliegenden Erfindung.

Das in Figur 1 gezeigte System zur sicheren Kommunikation besteht aus einer ersten Computereinrichtung 100 und einer zweiten Computereinrichtung 200 und ist mit einem Netzwerk 300 verbunden.

Die erste Computereinrichtung 100 kann ein gewöhnlicher Computer, ein Desktop-Computer, ein Laptop, oder ein Tablet-Computer oder ähnliches sein.

Die erste Computereinrichtung 100 weist ein erstes Betriebssystem auf. Das erste Betriebssystem ist bevorzugterweise ein Windows-Betriebsystem wie Windows XP, Windows Vista, Windows 7, Windows 8, ein Macintosh-Betriebssystem wie Mac OS X, ein Linux- oder UNIX-Derivat oder ein beliebiges anderes Desktop-Betriebssystem. Falls es sich auch bei der ersten Computereinrichtung um eine mobile Computereinrichtung, beispielsweise um einen Tablet-Computer oder um ein Smartphone handelt, so kann das Betriebssystem auch ein entsprechendes Tablet- oder Smartphone-Betriebssystem sein, wie etwa Google Android, iOS, Windows, ein Linux- oder UNIX-Derivat oder ein beliebiges anderes System.

Die zweite Computereinrichtung 200 ist bevorzugterweise eine mobile Computereinrichtung und ist besonders bevorzugterweise ein Telefon (z.B. ein Mobiltelefon oder ein Smartphone), ein Modem, eine Set-Top-Box oder ähnliches. Die zweite Computereinrichtung 200 weist ein zweites Betriebssystem auf, beispielsweise ein Smartphone-Betriebssystem wie Windows, iOS, Google Android, oder ein Linux- oder UNIX-Derivat.

Insbesondere handelt es sich bei dem zweiten Betriebssystem um ein gehärtetes Betriebssystem handelt. Ein gehärtetes Betriebssystem stellt ein Betriebssystem dar, bei dem eine oder mehrere Vorkehrungen getroffen wurden, um die Sicherheit des Betriebssystems zu verbessern. Hierdurch sollen Angriffe und/oder Zugriffe unbefugter Personen auf das System erschwert werden.

Ein Betriebssystem kann beispielsweise gehärtet werden, indem verschiedene Dienste oder Funktionen, die zum Betrieb nicht zwingend erforderlich sind, weggelassen, entfernt oder deaktiviert werden. Beispielsweise können zum Härten des Betriebssystems Dienste wie z.B. ein Webserver-Dienst, ein Dateiserver-Dienst, ein Update-Dienst, etc. weggelassen, entfernt oder deaktiviert werden.

Eine weitere Möglichkeit zum Härten des zweiten Betriebssystems besteht in der Verwendung einer Firewall und/oder dem Schließen nicht benötigter Ports. Weitere Möglichkeiten zum Härten eines Betriebssystems sind die Verwendung von auf Sourcecode-Ebene geprüften Routinen und/oder die Verwendung sicherheitszertifizierter Bibliotheken, wobei diese Maßnahmen einzeln oder auch in Kombination vorgenommen werden können. Das gehärtete Betriebssystem kann beispielsweise Windows, Linux (z.B. Android), Unix, iOS oder ein beliebiges anderes gehärtetes Smartphone-Betriebssystem sein. Vorteilhafterweise unterscheidet sich das gehärtete Betriebssystem durch einzelne oder mehrere Maßnahmen von den Standard-Varianten dieser Betriebssysteme.

Vorteilhafterweise sind das erste und das zweite Betriebssystem nicht identisch, sondern unterscheiden sich voneinander. Dabei schließt die Verwendung identischer oder weitgehend ähnlicher Kerne, wie beispielsweise bei den Smartphone und Desktop-Varianten von Windows 8 oder bei den verschiedenen Linux und Unix-Derivaten für Mobil- oder Desktop-Computer nicht aus, dass es sich hierbei im Sinne der vorliegenden Erfindung um unterschiedliche Betriebssysteme handelt.

In einer besonders vorteilhaften Ausführungsform handelt es sich bei der zweiten Computereinrichtung um ein Smartphone mit einem gehärteten Android-Betriebssystem und bei der ersten Computereinrichtung um einen Laptop oder ein Notebook mit einem Windows-Betriebssystem.

Die zweite Computereinrichtung 200 weist darüber hinaus ein erstes Empfangsmittel 220 zum Empfangen von Daten von der ersten Computereinrichtung 100, ein erstes Sendemittel 240 zum Senden von Daten an das Netzwerk 300, ein zweites Empfangsmittel 240 zum Empfangen von Daten von dem Netzwerk 300, und ein zweites Sendemittel zum Senden von Daten an die erste Computereinrichtung 100 auf. Zum Senden und Empfangen der jeweiligen Daten können verschiedene Übertragungs-Techniken verwendet werden.

Sende- und Empfangsmittel können jeweils voneinander getrennte Komponenten darstellen, können aber beispielsweise auch als ein oder zwei gemeinsame Sende- und Empfangsmittel ausgebildet sein.

Für die Verbindung zwischen der ersten Computereinrichtung 100 und dem ersten Sendemittel 220 sowie zwischen der ersten Computereinrichtung 100 und dem zweiten Sendemittel 220 können beispielsweise drahtgebundene oder auch drahtlose Verbindungen verwendet werden. Drahtlose Verbindungen eignen sich dabei besonders, wenn es sich auch bei der ersten Computereinrichtung um ein Mobilgerät, wie etwa einen mobilen Computer, einen Laptop oder einen Tablet-Computer handelt. Die drahtlose Verbindung kann beispielsweise eine WLAN-Verbindung oder eine Bluetooth-Verbindung sein.

Die Verbindung zwischen dem ersten Empfangsmittel 220 und der ersten Computereinrichtung 100, sowie zwischen dem zweiten Sendemittel 220 und der ersten Computereinrichtung 100 kann insbesondere zur Übertragung von unverschlüsselten Daten ausgebildet sein. Dies erlaubt es, in der ersten Computereinrichtung 100 auf Verschlüsselungsmittel zu verzichten.

Die Verbindung zwischen dem ersten Sendemittel 240 und dem Netzwerk 300, sowie zwischen dem Netzwerk 300 und dem zweiten Empfangsmittel 240 kann dazu ausgebildet sein, verschlüsselte Daten zu senden bzw. zu empfangen. Dies ermöglicht eine verschlüsselte und damit abhörsichere Kommunikation zwischen der zweiten Computereinrichtung 200 und dem Netzwerk 300, beispielsweise dem Internet.

Die zweite Computereinrichtung 200 umfasst ferner ein Authentifizierungsmittel 210 zum Authentifizieren eines Benutzers. Bovorzugterweise kann hierdurch der Benutzer der zweiten Computereinrichtung identifiziert und authentifiziert werden.

Das Authentifizierungsmittel 210 kann den Benutzer beispielsweise über eine in ein Lesegerät der zweiten Computereinrichtung 200 eingeführte Identifikationskarte, beispielsweise eine SmartCard oder einen elektronischen Ausweis, identifizieren und beispielsweise durch Abgleich mit einer internen oder externen Datenbank den Benutzer authentifizieren, also feststellen, dass der Benutzer zur Benutzung des Systems berechtigt ist.

Weitere Möglichkeiten zur Authentifizierung eines Benutzers sind beispielsweise die Eingabe einer benutzerdefinierten Kennung (beispielsweise einer PIN), das Erfassen eines biometrischen Merkmals (beispielsweise eines Fingerabdrucks) sowie weitere dem Fachmann bekannte Maßnahmen an der zweiten Computereinrichtung 200. Beispielsweise kann der Benutzer auf einem als zweite Computereinrichtung 200 dienenden Smartphone eine PIN zur Authentifizierung eingeben.

Das Authentifizierungsmittel 210 kann zusätzlich oder alternativ dazu auch derart ausgebildet sein, dass es die Authentifizierung eines Benutzers der ersten Computereinrichtung ermöglicht. Beispielsweise kann ein Benutzer der ersten Benutzereinrichtung 100 durch eine in die erste Computereinrichtung 100 eingeführte Identifikationskarte oder durch Eingabe einer benutzerdefinierten Kennung an der ersten Computereinrichtung 100, beispielsweise einer PIN, identifiziert und zur Benutzung des Systems autorisiert werden. Hierzu werden die zur Authentifizierung des Benutzers verwendeten Daten über die Verbindung zwischen der ersten Computereinrichtung 100 und der zweiten Computereinrichtung 200 an die zweite Computereinrichtung 200 übertragen, bevorzugterweise über eine verschlüsselte Verbindung.

Bei erfolgreicher Authentifizierung eines Benutzers erzeugt das Authentifizierungsmittel 210 einen oder mehrere Befehle.

Die zweite Computereinrichtung 200 weist ferner eine Einheit 230 zum Verschlüsseln von Daten und zum Entschlüsseln von Daten auf. Hierzu kann beispielsweise ein fest vordefinierter Verschlüsselungs- oder Entschlüsselungscode verwendet werden, oder auch ein benutzerabhängiger variabler oder benutzerabhängiger vordefinierter Code.

Vorteilhafterweise erfolgt die Ver- und Entschlüsselung unter Berücksichtigung und/oder Verwendung eines oder mehrerer von dem Authentifizierungsmittel 210 ausgegebener Befehle. Beispielsweise kann nach der Authentifizierung des Benutzers in dem Authentifizierungsmittel 210 von dem Authentifizierungsmittel 210 ein Befehl an das Ver- und/oder Entschlüsselungsmittel 230 ausgegeben werden, woraufhin das Ver- und/oder Entschlüsselungsmittel 230 einen benutzerdefinierten Ver- und/oder Entschlüsselungscode erzeugt. Dieser Code kann dann dazu verwendet werden, dem Benutzer einem Zugriff auf in dem Netzwerk 300 abgelegte bzw. über das Netzwerk 300 empfangene verschlüsselte Daten zu ermöglichen. Alternativ dazu kann es sich bei dem Befehl auch direkt um einen Code zum Ver- und/oder Entschlüsseln handeln. Beispielsweise kann ein derartiger Code auf einer zur Authentifizierung verwendeten Smartcard gespeichert sein.

Vorteilhafterweise ist das Verschlüsselungsmittel 230 ein zertifiziertes Verschlüsselungsmittel und das Entschlüsselungsmittel 230 ein zertifiziertes Entschlüsselungsmittel. Das erste Empfangsmittel 220 der zweiten Computereinrichtung 200 ist dazu ausgelegt, unverschlüsselte Daten von der ersten Computereinrichtung 100 zu empfangen und an das Verschlüsselungsmittel 230 weiterzuleiten.

Das Verschlüsselungsmittel 230 verschlüsselt diese Daten basierend auf dem oder den Befehlen des Authentifizierungsmittels 210 und leitet die verschlüsselten Daten an das erste Sendemittel 240 weiter. Das erste Sendemittel 240 ist dazu ausgelegt, die von dem Verschlüsselungsmittel 230 bereitgestellten verschlüsselten Daten über eine verschlüsselte Kommunikationsverbindung an das Netzwerk 300, beispielsweise das Internet zu senden.

Das zweite Empfangsmittel 240 ist dazu ausgelegt, über eine verschlüsselte Verbindung mit dem Netzwerk 300, beispielsweise dem Internet verschlüsselte Daten zu empfangen und an das Entschlüsselungsmittel 230 weiterzuleiten. Das Entschlüsselungsmittel 230 ist dazu ausgelegt, die von dem zweiten Empfangsmittel 240 bereitgestellten verschlüsselten Daten zu entschlüsseln und diese an das zweite Sendemittel 220 weiterzuleiten. Das zweite Sendemittel 220 wiederum ist dazu ausgelegt, die von dem Entschlüsselungsmittel bereitgestellten entschlüsselten Daten über eine drahtlose oder drahtgebundene Verbindung an die erste Computereinrichtung 100 zu übertragen.

Die verschlüsselte Verbindung zwischen dem ersten Sendemittel 240 und dem Netzwerk 300 sowie die verschlüsselte Verbindung zwischen dem Netzwerk 300 und dem zweiten Empfangsmittel 240 kann mittels verschiedenster Kommunikationsmittel realisiert werden. Möglich sind insbesondere drahtgebundene Kommunikationsverbindungen wie beispielsweise ISDN oder DSL, VDSL oder beliebige andere drahtgebundene Kommunikationsmittel. Die Kommunikation kann insbesondere aber auch über eine drahtlose Kommunikationsverbindung realisiert werden, wie beispielsweise eine WLAN-Verbindung oder eine Mobilfunkverbindung. Hierzu können verschiedenste Technologien verwendet werden, unter anderem beispielsweise GSM, GPRS, EDGE, UMTS, HSDPA, HSUPA, HSPA, HSPA+, LTE, LTE Advanced, WIMAX, etc.

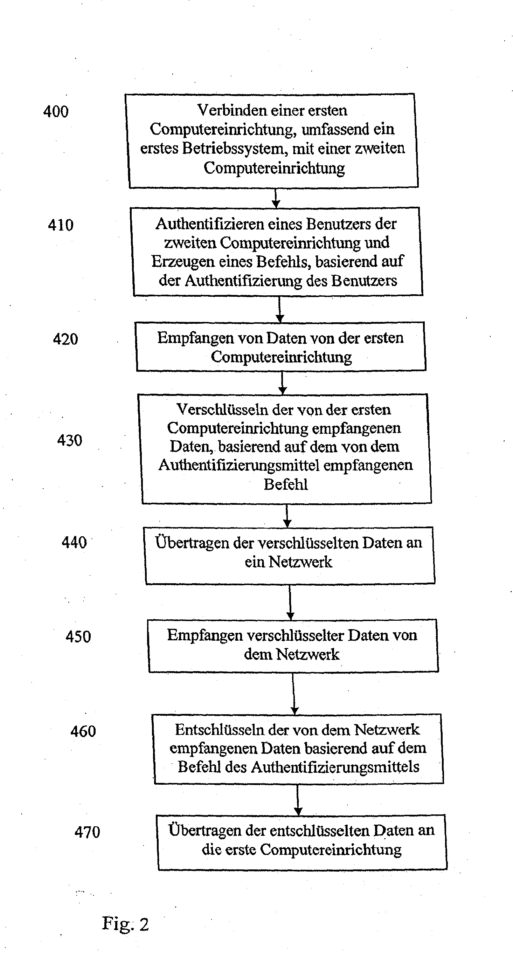

Figur 2 zeigt schematisch ein Verfahren gemäß einem Ausführungsbeispiel der vorliegenden Erfindung.

Das Verfahren umfasst in einem ersten Schritt 400 das Verbinden einer ersten Computereinrichtung, umfassend ein erstes Betriebssystem, mit einer zweiten Computereinrichtung. Bei der ersten Computereinrichtung kann es sich beispielsweise um obige erste Computereinrichtung 100 handeln, und bei der zweiten Computereinrichtung um die zweite Computereinrichtung 200.

Dabei ist klar, dass die obigen Ausführungen auch analog auf das hier beschriebene Verfahren angewendet werden können.

In einem zweiten Verfahrensschritt 410 wird ein Benutzer der ersten oder zweiten Computereinrichtung authentifiziert, beispielsweise in einem Authentifizierungsmittel 210 der zweiten Computereinrichtung, und basierend auf der Authentifizierung des Benutzers ein Befehl erzeugt.

In einem Schritt 420 werden Daten von der ersten Computereinrichtung empfangen, beispielsweise durch ein erstes Empfangsmittel 220 der zweiten Computereinrichtung 200.

In einem Schritt 430 werden die von der ersten Computereinrichtung empfangenen Daten basierend auf dem bei der Authentifizierung erzeugten Befehl vollständig oder zumindest teilweise verschlüsselt.

In einem Schritt 440 werden die vollständig oder teilweise verschlüsselten Daten an ein Netzwerk übertragen, beispielsweise von einem ersten Sendemittel 240 der zweiten Computereinrichtung 200. Bei dem Netzwerk kann es sich beispielsweise um das Netzwerk 300 handeln, beispielsweise um ein Firmennetzwerk oder das Internet.

In einem Schritt 450 werden verschlüsselte Daten von dem Netzwerk empfangen, beispielsweise in Antwort auf zuvor an das Netzwerk übertragene Daten.

In einem Schritt 460 werden die von dem Netzwerk empfangenen, verschlüsselten Daten entschlüsselt, beispielsweise in dem Entschlüsselungsmittel 230, und zwar basierend auf dem Befehl der Benutzerauthentifizierung.

In einem Schritt 470 werden dann die entschlüsselten Daten an die erste Computereinrichtung 100 übertragen.

Dieses Verfahren ermöglicht eine sichere Kommunikation zwischen einer ersten Computereinrichtung und einem Netzwerk.

## Patentansprüche

1. Ein System zur sicheren Kommunikation, umfassend:
eine erste Computereinrichtung (100) und eine zweite Computereinrichtung (200),
wobei die erste Computereinrichtung (100) ein erstes Betriebssystem umfasst und dazu ausgelegt ist, mit der zweiten Computereinrichtung (200) verbunden zu werden,
wobei die zweite Computereinrichtung (200) eine mobile Computereinrichtung ist und wobei die zweite Computereinrichtung (200) umfasst:
ein zweites Betriebssystem, wobei das zweite Betriebssystem ein gehärtetes Betriebssystem ist,
Authentifizierungsmittel (210) zum autorisieren eines Benutzers und zum Erzeugen eines Befehls basierend auf der Authentifizierung des Benutzers,
erste Empfangsmittel (220) zum Empfangen von Daten von der ersten Computereinrichtung (100),
Verschlüsselungsmittel (230) zum Verschlüsseln der von der ersten Computereinrichtung (100) empfangenen Daten, basierend auf dem von dem Authentifikationsmittel (210) erzeugten Befehl,
erste Sendemittel (240) zum Senden der verschlüsselten Daten an ein Netzwerk (300),
zweite Empfangsmittel (240) zum Empfangen verschlüsselter Daten von dem Netzwerk (300),
Entschlüsselungsmittel (230) zum Entschlüsseln der von dem Netzwerk (300) empfangenen Daten, basierend auf dem von dem Authentifikationsmittel (210) erzeugten Befehl, und
zweite Sendemittel (220) zum Senden der entschlüsselten Daten an die erste Computereinrichtung (100).

2. System nach Anspruch 1, wobei die ersten Sendemittel (240) Sendemittel für eine drahtgebundene Übertragung der verschlüsselten Daten an das Netzwerk (300) und die zweiten Empfangsmittel (240) Empfangsmittel für einen drahtgebundenen Empfang der verschlüsselten Daten von dem Netzwerk (300) sind.

3. System nach Anspruch 1, wobei die ersten Sendemittel (240) Sendemittel für eine drahtlose Übertragung der verschlüsselten Daten an das Netzwerk (300) und die zweiten Empfangsmittel (240) Empfangsmittel für einen drahtlosen Empfang der verschlüsselten Daten von dem Netzwerk (300) sind.

4. System nach Anspruch 3, wobei die ersten Sendemittel (240) WLAN-Sendemittel und die zweiten Empfangsmittel (240) WLAN-Empfangsmittel sind.

5. System nach einem der Ansprüche 1 bis 4, wobei die Verschlüsselungsmittel (230) sicherheitszertifizierte Verschlüsselungsmittel sind und die Entschlüsselungsmittel (230) sicherheitszertifizierte Entschlüsselungsmittel sind.

6. System nach einem der Ansprüche 1 bis 5, wobei die ersten Empfangsmittel (220) Empfangsmittel für einen drahtgebundenen Empfang der Daten von der ersten Computereinrichtung (100) und die zweiten Sendemittel (220) Sendemittel für eine drahtgebundene Versendung der entschlüsselten Daten an die erste Computereinrichtung (100) sind.

7. System nach einem der Ansprüche 1 bis 5, wobei die ersten Empfangsmittel (220) Empfangsmittel für einen drahtlosen Empfang der Daten von der ersten Computereinrichtung (100) und die zweiten Sendemittel (220) Sendemittel für eine drahtlose Übertragung der entschlüsselten Daten an die erste Computereinrichtung (100) sind.

8. System nach Anspruch 7, wobei die ersten Empfangsmittel (220) Bluetooth-Empfangsmittel oder WLAN-Empfangsmittel und die zweiten Sendemittel (220) Bluetooth-Sendemittel oder WLAN-Sendemittel sind.

9. Ein Verfahren zur sicheren Kommunikation, umfassend die Schritte:
Verbinden (400) einer ersten Computereinrichtung (100), welche ein erstes Betriebssystem umfasst, mit einer zweiten Computereinrichtung (200), wobei die zweite Computereinrichtung (200) eine mobile Computereinrichtung ist und ein zweites Betriebssystem umfasst, wobei das zweite Betriebssystem ein gehärtetes Betriebssystem ist,
Authentifizieren (410) eines Benutzers und Erzeugen eines Befehls basierend auf der Authentifizierung des Benutzers,
Empfangen (420) von Daten von der ersten Computereinrichtung (100),
Verschlüsseln (430) der von der ersten Computereinrichtung (100) empfangenen Daten basierend auf dem Befehl der Benutzerauthentifizierung,
Senden (440) der verschlüsselten Daten an ein Netzwerk (300),
Empfangen (450) verschlüsselter Daten von dem Netzwerk (300),
Entschlüsseln (460) der von dem Netzwerk (300) empfangenen Daten basierend auf dem Befehl der Benutzerauthentifizierung, und
Senden (470) der entschlüsselten Daten an die erste Computereinrichtung (100).

10. Verfahren nach Anspruch 9, wobei das Senden der verschlüsselten Daten an das Netzwerk (300) eine drahtgebundene Übertragung ist und wobei der Empfang der verschlüsselten Daten von dem Netzwerk (300) ein drahtgebundener Empfang ist.

11. Verfahren nach Anspruch 9, wobei das Senden der verschlüsselten Daten an das Netzwerk (300) eine drahtlose Übertragung ist und wobei das Empfangen der verschlüsselten Daten von dem Netzwerk (300) ein drahtloses Empfangen ist.

12. Verfahren nach Anspruch 11, wobei das Senden der verschlüsselten Daten zu dem Netzwerk (300) eine WLAN-Übertragung und das Empfangen der verschlüsselten Daten von dem Netzwerk (300) ein WLAN-Empfang ist.

13. Verfahren nach einem der Ansprüche 9 bis 12, wobei das Verschlüsseln ein sicherheitszertifiziertes Verschlüsseln und das Entschlüsseln ein sicherheitszertifiziertes Entschlüsseln ist.

14. Verfahren nach einem der Ansprüche 9 bis 13, wobei das Empfangen der Daten von der ersten Computereinrichtung (100) ein drahtgebundener Empfang und das Senden der entschlüsselten Daten zu der ersten Computereinrichtung (100) eine drahtgebundene Übertragung ist.

15. Verfahren nach einem der Ansprüche 9 bis 13, wobei das Empfangen der Daten von der ersten Computereinrichtung (100) ein drahtloser Empfang, insbesondere über eine Bluetooth-Verbindung oder eine WLAN-Verbindung, und das Senden der entschlüsselten Daten zu der ersten Computereinrichtung (100) eine drahtlose Übertragung, insbesondere über eine Bluetooth-Verbindung oder eine WLAN-Verbindung, ist.
